# EUROPÄISCHE PATENTANMELDUNG

(11) **EP 4 744 769 A1**
(43) Veröffentlichungstag der Anmeldung: **20.05.2026**
(21) Anmeldenummer: 24212917.9
(22) Anmeldetag: 14.11.2024
(51) Int. Cl.: B01J 19/30, B01J 19/32

(54) **FIXIERVORRICHTUNG FÜR EIN SEGMENTIERUNGSELEMENT IN EINEM KATALYSATORKORB FÜR SCHÜTTGUTKATALYSATOREN**

(71) Anmelder: Heraeus Precious Metals GmbH & Co. KG, 63450 Hanau (DE)
(72) Erfinder: Heinrich, Andreas, 63450 Hanau (DE)
(74) Vertreter: Heraeus IP

(57) **Zusammenfassung**

Die Erfindung betrifft eine Fixiervorrichtung zur Befestigung eines Segmentierungselements auf einem gasdurchlässigen Boden. Der gasdurchlässige Boden kann Teil eines Katalysatorkorbs sein. Die Fixiervorrichtung weist einen Fuß, einen Ständer und eine Haltevorrichtung auf, wobei der Ständer auf dem Fuß angeordnet ist und an dem Ständer eine Haltevorrichtung angeordnet ist. Die Haltevorrichtung ist zumindest teilweise über dem Fuß angeordnet und die Haltevorrichtung ist ausgebildet, ein Segmentierungselement gegen den Fuß zu drücken.

## Beschreibung

Die Erfindung betrifft eine Fixiervorrichtung für ein Segmentierungselement in einem segmentierten Katalysatorkorb sowie einen Katalysatorkorb enthaltend diese Fixiervorrichtung.

Festbettreaktoren für Gasreaktionen enthalten häufig Schüttgutkatalysatoren. Die Schüttgutkatalysatoren werden typischerweise in Körben angeordnet. Solche Katalysatorkörbe haben eine Korbwand und einen gasdurchlässigen Boden.

Ein Beispiel für die Verwendung von Katalysatorkörben mit darin angeordnetem Schüttgut sind großtechnische Reaktoren zur Herstellung von Salpetersäure mit dem Ostwald-Verfahren, bei dem Ammoniak mit Sauerstoff oxidiert wird. Im ersten Schritt wird hier ein Gemisch von gasförmigem Ammoniak und Sauerstoff bei 800°C - 930°C über ein Katalysatorsystem mit Platin-Rhodium-Netzen geleitet. Dabei entsteht als Nebenprodukt Distickstoffmonoxid (Lachgas). Da Lachgas ein hohes Treibhauspotenzial in der Erdatmosphäre besitzt, besteht das Bestreben, dieses so weit wie möglich zu reduzieren. Dazu wird der primär resultierende Gasstrom hinter dem Katalysatorsystem in Flussrichtung mit einem Schüttgutkatalysator, auch Sekundärkatalysator genannt, in Kontakt gebracht, der das gebildete Lachgas zu Sauerstoff und Stickstoff zersetzt.

Wenn der Schüttgutkatalysator im Reaktor in einem einfachen Katalysatorkorb vorliegt, dann kann sich das Material durch Vibrationen und thermische Ausdehnung während des Betriebs in diesem Korb frei bewegen. Dadurch kann es zu einer inhomogenen Schüttgutverteilung im Katalysatorkorb kommen. Dies wiederum beeinflusst die Strömungsbedingungen im Reaktor negativ. Um das Wandern des Schüttguts im Katalysatorkorb zu verhindern, wird der Katalysatorkorb mit Hilfe von einem oder mehreren Segmentierungselementen in einzelne Teilbereiche segmentiert. Ein Segmentierungselement kann vorzugsweise ein Blech sein. Segmentierungselemente sind im Katalysatorkorb vorzugsweise senkrecht auf dem Korbboden angeordnet. Der Korbboden ist gasdurchlässig und umfasst meist eine oder mehrere Netzlagen, ein Gitter, ein Lochblech oder eine Kombination dieser Möglichkeiten. Da sich das Segmentierungselement wegen der auftretenden Vibrationen oder thermischen Ausdehnung im Betrieb des Reaktors ebenfalls bewegt, kann es dazu kommen, dass Schüttgutkatalysator unter ein Segmentierungselement gelangt, sodass die Segmentierung zum Teil wieder aufgehoben wird und Schüttgutkatalysator im Korb wandern kann. Dies gilt es zu vermeiden.

Vor diesem Hintergrund war es eine Aufgabe der vorliegenden Erfindung eine einfache Befestigungsvorrichtung für ein Segmentierungselement auf einem gasdurchlässigen Boden, insbesondere einem Korbboden eines Katalysatorkorbs bereitzustellen.

Weiterhin ist es ist es häufig erforderlich, dass die Befestigungsvorrichtung für ein Segmentierungselement möglichst stabil gegen Korrosion ist.

Eine weitere bevorzugte Aufgabe bestand darin eine Fixiervorrichtung bereitzustellen, die einfach anzubringen ist und das Segmentierungselement verlässlich an seinem Platz auf dem gasdurchlässigen Boden hält. Weiterhin bevorzugt war es eine Aufgabe der Erfindung eine Fixiervorrichtung bereitzustellen, die weder den gasdurchlässigen Boden noch das Segmentierungselement, welches durch die Fixiervorrichtung befestigt wird, beschädigt.

Die Aufgabe wird gelöst durch eine Fixiervorrichtung (1) zur Befestigung eines Segmentierungselements (40) auf einem gasdurchlässigen Boden (50), aufweisend einen Fuß (10), einen Ständer (20) und eine Haltevorrichtung (30), wobei der Ständer mit dem Fuß (10) verbunden ist und an dem Ständer (20) eine Haltevorrichtung (30) angeordnet ist, dadurch gekennzeichnet, dass die Haltevorrichtung (30) zumindest teilweise über dem Fuß (10) angeordnet ist und dass die Haltevorrichtung (20) ausgebildet ist, ein Segmentierungselement (40) gegen den Fuß (10) zu drücken.

Durch die erfindungsgemäße Lösung kann eine besonders einfache und zuverlässige Fixierung eines Segmentierungselements auf einem gasdurchlässigen Boden erreicht werden, sodass Schüttgutkatalysator sich weniger lokal ansammeln kann. Insbesondere wird der gasdurchlässige Boden durch die Fixiervorrichtung kaum oder überhaupt nicht beschädigt, sodass Schüttgutkatalysator nicht aus dem Katalysatorkorb entweichen kann. Anders ausgedrückt fällt Schüttgutkatalysator nicht aus dem Korbboden, wenn dieser Korbboden intakt bleibt, während die Fixierung des Segmentierungselements angebracht ist. Schlussendlich kann durch die Erfindung eine gleichmäßigere Katalysatorverteilung eines Schüttgutkatalysators in einem Katalysatorkorb erreicht werden, was wiederum zu gleichmäßigeren Strömungsbedingungen führen kann.

Die Erfindung betrifft eine Fixiervorrichtung. Unter einer solchen Fixiervorrichtung im Rahmen der Erfindung kann vorzugsweise eine Vorrichtung verstanden werden, die zur Befestigung eines Segmentierungselements auf einem gasdurchlässigen Boden geeignet ist. Insbesondere befestigt die Fixiervorrichtung ein senkrecht auf einem gasdurchlässigen Boden stehendes Segmentierungselement durch eine formschlüssige Befestigung. In einer möglichen Ausführung befestigt die Fixiervorrichtung ein senkrecht stehendes Segmentierungsblech auf dem Boden.

Das Segmentierungselement der vorliegenden Erfindung kann beispielsweise ein ungelochtes Blech, ein Lochblech, ein Gitter oder ein Netz sein. Das Segmentierungselement kann beispielsweise ringförmig auf dem gasdurchlässigen Boden angeordnet sein. Wenn es sich bei dem Segmentierungselement um ein Gitter oder Netz handelt, kann das Segmentierungselement eine Stützstruktur für das Netz oder Gitter umfassen. Die Stützstruktur kann zum Beispiel ein Rahmen sein, indem ein Gitter oder Netz gespannt ist oder an dem ein Gitter oder Netz befestigt ist. Das Segmentierungselement kann auch als Trennwand zwischen mindestens zwei Bereichen in einem Katalysatorkorb verstanden werden, wobei vorzugsweise in mindestens einem Bereich Schüttgutkatalysator vorliegt.

Der gasdurchlässige Boden der vorliegenden Erfindung kann ein Netz, ein Gitter oder ein gasdurchlässiges Blech, z.B. ein Lochblech sein. Vorzugsweise ist der gasdurchlässige Boden Teil eines Katalysatorkorbs. Ein Katalysatorkorb umfasst zumindest eine Korbwand, die ein Volumen umgibt, und einen gasdurchlässigen Boden, der das Volumen zu einer Seite des Korbes begrenzt, insbesondere verschließt. Unter dem Begriff Verschließen ist hier gemeint, dass das Austreten von Feststoff vermieden wird, während Gas durch den Boden hindurchtreten kann. Die Korbwand des Katalysatorkorbs kann gasdurchlässig oder gasundurchlässig sein. Zum Beispiel ist die Korbwand gasundurchlässig, wenn sie aus einem durchgehenden Blech gebildet wird. Alternativ kann die Korbwand des Katalysatorkorbs gasdurchlässig sein, z.B. wenn sie ein Lochblech oder ein Gitter umfasst. Der gasdurchlässige Boden enthält Öffnungen, durch die Gas hindurchtreten kann. Der gasdurchlässige Boden kann optional formschlüssig oder stoffschlüssig mit der Korbwand des Katalysatorkorbs verbunden sein. Das Material des Katalysatorkorbs, bzw. des gasdurchlässigen Bodens und der Katalysatorwand ist vorzugsweise aus einem Material, das in einem Ammoniakoxidations-Reaktor möglichst korrosionsstabil ist. Vorzugsweise umfasst das Material des Katalysatorkorbs und seinen Bestandteilen Stahl oder besteht aus Stahl. Geeignete Materialien für die Fixiervorrichtung und den Katalysatorkorb müssen den Bedingungen in einem Ammoniakoxidations-Reaktor während des Prozesses standhalten und sind dem Fachmann bekannt. Beispielsweise können Nickel-Chrom-Legierungen (NiCrFe-Legierungen) wie Inconel600 (Werkstoffnr. 2.4816), Eisen-Chrom-Aluminium-Legierungen (FeCrAI-Legierungen) wie sie beispielsweise unter den Handelsnamen Megapyr (Werkstoffnr. 1.4767) oder Kanthal (z.B. Kanthal A-1: 22,00 Gew.-% Cr, 5,80 Gew.-%AI, Rest Fe) erhältlich sind oder hitzebeständige Edelstähle eingesetzt werden, wobei sich Nickel-Chrom-Legierungen als besonders geeignet erwiesen haben.

Der Katalysatorkorb kann vorzugsweise einteilig oder mehrteilig ausgestaltet sein. Wenn der Katalysatorkorb einteilig ausgestaltet ist, kann der Boden und die Wand aus einem durchgehenden Netz, Gitter oder Lochblech geformt sein.

Die Fixiervorrichtung weist einen Fuß, einen Ständer und eine Haltevorrichtung auf. Der Fuß kann beispielsweise ein Blech oder ein Lochblech sein.

Der Fuß erfüllt mehrere Funktionen. Zum einen dient er als Grundplatte für den Ständer, der mit dem Fuß verbunden ist. Zum anderen fungiert er als Gegenstück zur Haltevorrichtung, um ein Segmentierungselement zwischen diesen beiden zu befestigen. Anders ausgedrückt kann die Haltevorrichtung das Segmentierungselement gegen den Fuß drücken.

Der Ständer beabstandet vorzugsweise den Fuß von der Haltevorrichtung. Über den Ständer bestimmt sich, wie groß der Abstand zwischen Fuß und Haltevorrichtung ist. Vorzugsweise ist der Abstand zwischen Fuß und Haltevorrichtung über den Ständer flexibel einstellbar. Dazu kann der Ständer optional über einen Verstellmechanismus verfügen. Der Verstellmechanismus umfasst vorzugsweise ein Schraubgewinde oder eine Klemmvorrichtung. Insbesondere kann der Verstellmechanismus ein Schraubgewinde mit einer Kontermutter sein. In einer möglichen Ausführungsform kann der Verstellmechanismus als Teil des Ständers die Haltevorrichtung und den Fuß aufeinander zubewegen, sodass, ein optionales Segmentierungselement zwischen Fuß und Haltevorrichtung befestigt wird. Der Ständer ist so ausgestaltet, dass er durch einen gasdurchlässigen Boden geführt werden kann, ohne diesen zu beschädigen. Für den Fall, dass der gasdurchlässige Boden ein Netz oder Gitter umfasst, ist der Ständer vorzugsweise so ausgestaltet, dass er durch das Netz oder Gitter geführt werden kann, ohne dieses zu beschädigen, insbesondere ohne dies zu zertrennen. Es kann sich bei dem Ständer vorzugsweise um einen Stab handeln, der einen maximalen Durchmesser von 1 - 5 mm, insbesondere 2-3 mm aufweist. So kann sichergestellt werden, dass der gasdurchlässige Boden kaum oder gar nicht beschädigt wird. Optional kann der Ständer in dem Bereich, der nicht dazu ausgebildet ist durch einen gasdurchlässigen Boden geführt zu werden, einen höheren Durchmesser aufweisen.

Die Haltevorrichtung ist am Ständer befestigt und bewirkt, dass ein Segmentierungselement, insbesondere ein Segmentierungsblech sich nicht von dem gasdurchlässigen Boden entfernen oder abheben kann. Die Haltevorrichtung kann beispielsweise ein Haken, eine Nut oder eine Klammer sein. Die Haltevorrichtung ist vorzugsweise ausgebildet, über ein Segmentierungselement Druck auf den Fuß auszuüben.

Die Fixiervorrichtung kann in einer optionalen Ausführung einteilig ausgestaltet sein, sodass Fuß, Ständer und Haltevorrichtung aus einem Stück gefertigt sind. Für diesen Fall handelt es sich bei der Fixiervorrichtung um eine Art Klammer. Vorzugsweise ist die Fixiervorrichtung mehrteilig ausgestaltet, sodass ein oder mehrere Teile der Fixiervorrichtung dezidierte Teile der Fixiervorrichtung darstellen, die zusammen die Fixiervorrichtung bilden. Beispielsweise kann die Fixiervorrichtung einen separaten Fuß aufweisen, der mit dem Ständer verbunden ist. Der Fuß kann mit dem Ständer zum Beispiel verschraubt, verschweißt, vernietet oder anderweitig verbunden sein. Bevorzugt ist der Fuß mit dem Ständer verschraubt oder verschweißt. Der Ständer und die Haltevorrichtung können beispielsweise aus einem Stück oder mehrteilig gefertigt sein. Besonders bevorzugt ist die Haltevorrichtung mit dem Ständer über eine Schraubverbindung verbunden.

Ein zweiter Aspekt der Erfindung betrifft einen segmentierten Katalysatorkorb für einen Schüttgutkatalysator, wobei der Katalysatorkorb einen gasdurchlässigen Boden, ein oder mehrere Segmentierungselemente und eine Fixiervorrichtung zum Befestigen mindestens eines Segmentierungselements auf dem gasdurchlässigen Boden aufweist, wobei die Fixiervorrichtung einen Fuß, einen Ständer und eine Haltevorrichtung umfasst, wobei der Fuß unter dem gasdurchlässigen Boden angeordnet ist, der Ständer an dem Fuß befestigt ist und an dem Ständer die Haltevorrichtung angeordnet, insbesondere befestigt ist, dadurch gekennzeichnet, dass die Haltevorrichtung zumindest teilweise über dem Fuß angeordnet ist und das Segmentierungselement auf dem gasdurchlässigen Boden befestigt, insbesondere gehalten, wird.

Durch den erfindungsgemäßen Katalysatorkorb kann eine verbesserte Segmentierung des Schüttgutkatalysators erreicht werden, wodurch Schüttgutkatalysator im Reaktor während des Betriebs davon abgehalten wird von einem Segment zum anderen zu wandern und sich dort anzusammeln.

Unter einem Katalysatorkorb kann ein Behältnis verstanden werden, das zumindest eine Korbwand und einen gasdurchlässigen Boden aufweist. Der Katalysatorkorb ist in der Lage Schüttgutkatalysator aufzunehmen und sicher zu halten. Optional kann die Wand des Katalysatorkorbs gasdurchlässig sein. In einer möglichen Ausführungsform ist der gesamte Katalysatorkorb aus einem oder mehreren Netzen bzw. einem oder mehreren Gittern geformt. Es ist auch möglich, dass die Korbwand gasundurchlässig ist. In diesem Fall enthält die Korbwand ein Blech oder besteht die Korbwand aus einem Blech. Das Blech kann als Blechring ausgebildet sein. Der gasdurchlässige Boden kann formschlüssig oder stoffschlüssig mit der Korbwand verbunden sein.

Der Katalysatorkorb ist segmentiert. Segmentiert bedeutet hier, dass das Volumen des Katalysatorkorbs in mindestens zwei Volumensegmente unterteilt ist. Segmente sind so angeordnet, dass Gas den Katalysatorkorb durchströmen kann. Das Gas kann insbesondere Gas sein, das in einem Reaktor von der vorherigen Reaktionsstufe zu einem Schüttgutkatalysator geleitet wird. Der Katalysatorkorb ist dazu geeignet Schüttgutkatalysator aufzunehmen. Das Schüttgut kann insbesondere Granulate, Raschig-Ringe oder Pellets umfassen. Der mittlere Durchmesser des Schüttgutkatalysators liegt bevorzugt im Bereich von 2 - 20 mm.

Die Segmentierung des Katalysatorkorbs erfolgt mit mindestens einem Segmentierungselement. Das Segmentierungselement der vorliegenden Erfindung kann beispielsweise ein ungelochtes Blech, ein Lochblech, ein Gitter oder ein Netz sein. Wenn es sich bei dem Segmentierungselement um ein Gitter oder Netz handelt, kann das Segmentierungselement eine Stützstruktur für das Netz oder Gitter umfassen. Die Stützstruktur kann zum Beispiel ein Rahmen sein, indem ein Gitter oder Netz gespannt ist. Das Segmentierungselement kann vorzugsweise einen Katalysatorkorb in zwei oder mehr Segmente unterteilen. Die Zahl der möglichen Segmente ist erfindungsgemäß nicht weiter beschränkt und kann vom Fachmann festgelegt werden, um eine lokale Anhäufung von Schüttgutkatalysator zu vermeiden.

Der Katalysatorkorb enthält eine Fixiervorrichtung wie sie im ersten Aspekt der Erfindung beschrieben ist. Die Fixiervorrichtung umfasst einen Fuß, einen Ständer und eine Haltevorrichtung. Der Fuß ist unter dem gasdurchlässigen Boden angeordnet. Insbesondere befindet sich der Fuß auf der Seite des gasdurchlässigen Bodens, auf der sich kein Schüttgutkatalysatormaterial befindet. Anders ausgedrückt befindet sich der Fuß der Fixiervorrichtung außerhalb des Katalysatorkorbs. Dadurch befindet sich der Fuß auf der einen Seite des gasdurchlässigen Bodens und die am Ständer angebrachte Haltevorrichtung befindet sich auf der anderen Seite des gasdurchlässigen Bodens. Dadurch kann die Haltevorrichtung das Segmentierungselement üblicherweise gegen den gasdurchlässigen Boden und den darunter angeordneten Fuß drücken.

Der Ständer ist durch den gasdurchlässigen Boden hindurchgeführt und mit dem Fuß verbunden. Dabei ist der Ständer vorzugsweise derart durch den gasdurchlässigen Boden hindurchgeführt, dass dieser Boden nicht beschädigt wird. Insbesondere wenn der gasdurchlässige Boden ein Netz ist, ist der Ständer vorzugsweise so dimensioniert, dass das Netz nicht zerrissen wird.

Die Haltevorrichtung ist zumindest teilweise über dem Fuß angeordnet und das Segmentierungselement ist auf dem gasdurchlässigen Boden befestigt. Insbesondere wird das Segmentierungselement auf dem gasdurchlässigen Boden so gehalten, dass kein Schüttgutkatalysator zwischen Segmentierungselement und gasdurchlässigen Boden gelangen kann.

Die Dimensionen des Segmentierungselements sind vorzugsweise an die Dimensionen des Katalysatorkorbs angepasst, sodass eine ungleiche Verteilung von Schüttgutkatalysator im Katalysatorkorb wirksam vermieden werden kann.

Die Dimensionen des Fixierungselements sind vorzugsweise an die Dimensionen des Segmentierungselements angepasst, um seine Aufgabe erfüllen zu können.

Die Erfindung wird nachfolgend anhand von Beispielen weiter verdeutlicht, die jedoch nicht als einschränkend zu verstehen sind. Dem Fachmann ist ersichtlich, dass anstelle der hier beschriebenen Merkmale andere äquivalente Mittel in ähnlicher Weise verwendet werden können.

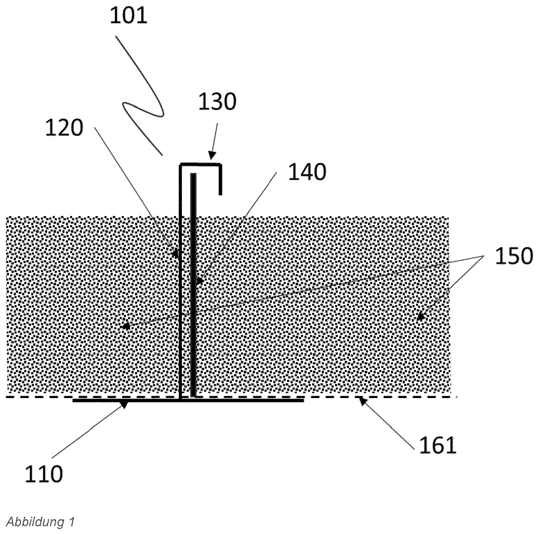

Abbildung 1 zeigt eine erfindungsgemäße Fixiervorrichtung (101) zur Befestigung eines Segmentierungselements (140) auf einem gasdurchlässigen Boden (161). Die Fixiervorrichtung weist einen Fuß (10), einen Ständer (120) und eine Haltevorrichtung (130) auf. Der Ständer ist mit dem Fuß (110) verbunden und an dem Ständer (120) ist eine Haltevorrichtung (130) angeordnet. Die Haltevorrichtung (130) ist zumindest teilweise über dem Fuß (110) angeordnet und derart ausgebildet, ein Segmentierungselement (140) gegen den gasdurchlässigen Boden und den darunter angeordneten Fuß (110) zu drücken. In der vorliegenden Abbildung ist das Segmentierungselement (140) als ein Segmentierungsblech ausgeführt. Das Segmentierungselement (140) trennt zwei Segmente voneinander, die jeweils Schüttgutkatalysator (150) aufweisen.

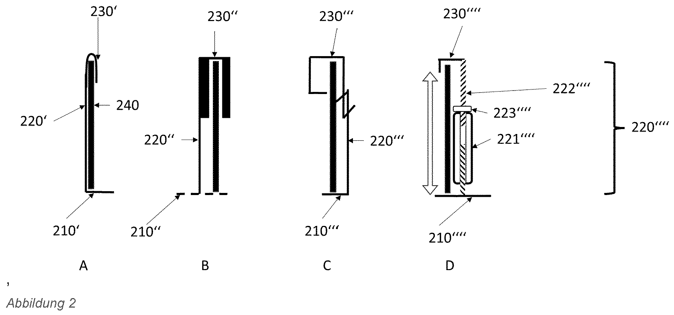

Abbildung 2 A - D zeigt verschiedene Beispiele für mögliche Ausgestaltungen der erfindungsgemäßen Fixiervorrichtung. Die Ausgestaltungen von Fuß, Ständer und Haltevorrichtung aus den gezeigten Abbildungen sind frei kombinierbar. Zum Beispiel kann der Fuß (210") aus Abbildung 2 B auch mit dem Ständer (220") aus Abbildung 2A kombiniert werden.

In Abbildung 2A ist eine sehr einfache Variante der Fixiervorrichtung dargestellt, bei der ein Ständer (220`), beispielsweise als Stab ausgeführt, an einem Fuß (210`) befestigt ist. Der Fuß kann hier z.B. als Blech ausgeführt sein. Die Haltevorrichtung (230`) ist am Ständer (220`) angebracht und derart ausgestaltet, dass sie ein Segmentierungselement halten kann. In der dargestellten möglichen Ausführungsform ist die Haltevorrichtung (230`) als einfacher Haken dargestellt. Beispielsweise können der Haken und der Ständer (220`) aus einem durchgehenden Stab gebildet sein, der an einem Ende gebogen ist.

In Abbildung 2B ist eine Alternative eines Fixierungselements dargestellt. Der Fuß (210") ist als Lochblech dargestellt. Die Haltevorrichtung (230") ist als Nut ausgebildet. Der Ständer (220") kann beispielsweise als Stab ausgebildet sein.

Abbildung 2C zeigt eine Fixiervorrichtung, bei der der Ständer (220‴) zweiteilig ausgeführt ist. Der Teil des Ständers der am Fuß (210‴) befestigt ist und der Teil des Ständers an dem die Haltevorrichtung (230‴) befestigt ist, sind formschlüssig miteinander verbunden, insbesondere ineinander verhakt.

Abbildung 2D zeigt eine Fixiervorrichtung, bei der an dem Fuß (210"") ein höhenverstellbarer Ständer (220"") befestigt ist. Der Fuß (210"") kann zum Beispiel mit dem Ständer (220"") verschraubt sein. Der gezeigte Ständer enthält eine Schraubverbindung mit zwei Gewindestangen (222"") einer Gewindehülse (21"") und einer Kontermutter (23ʺʺ). An dem höhenverstellbaren Ständer (220"") ist eine Haltevorrichtung (230"") befestigt. Durch die Schraubverbindung kann die Höhe der Haltevorrichtung eingestellt werden (angezeigt durch Doppelpfeil). Zusätzlich kann durch den Schraubverbund Druck auf das Segmentierungselement ausgeübt werden, sodass dieses zwischen Haltevorrichtung (230ʺʺ) und Fuß (210"") eingeklemmt wird.

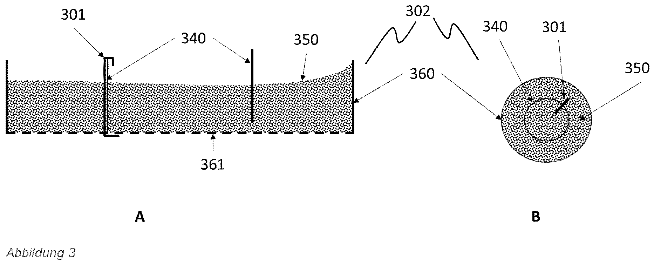

Abbildung 3 zeigt einen erfindungsgemäßen segmentierten Katalysatorkorb (302) im seitlichen Querschnitt in Abbildung 3A und vom gleichen Katalysatorkorb in der Draufsicht in Abbildung 3B. Der segmentierte Katalysatorkorb (302) enthält eine Korbwand (360) und einen gasdurchlässigen Boden (361). In dem segmentierten Katalysatorkorb (302) ist ein Segmentierungselement (340) angeordnet. In der dargestellten Ausführungsform ist das Segmentierungselement (340) als ringförmiges Blech dargestellt. Das Segmentierungselement (340) ist an einer Stelle mit einer Fixiervorrichtung (301) am gasdurchlässigen Boden (361) befestigt. Zur Veranschaulichung ist der Katalysatorkorb mit Schüttgutkatalysator (350) gefüllt, wobei der Schüttgutkatalysator nicht Teil der Erfindung ist.

Die rechte Seite des Segmentierungselements (340) ist nicht mit einer Fixiervorrichtung befestigt, sodass sich das Segmentierungselement heben kann und Schüttgutkatalysator (350) unter das Segmentierungselement gelangt. Dieser häuft sich dann an der Korbwand (360) des Katalysatorkorbs (302) an. Im Gegensatz dazu kann der Schüttgutkatalysator links nicht unter das Segmentierungselement (340) gelangen, da dieses durch die Fixiervorrichtung (301) auf dem gasdurchlässigen Boden (361) gehalten wird.

In Abbildung 3B ist der segmentierte Katalysatorkorb (302) in der Draufsicht gezeigt. Dieser ist mit Schüttgutkatalysator (350) befüllt. In dem Katalysatorkorb befindet sich ein Segmentierungselement (340) in Form eines Segmentierungsblechrings. Diese durch das Blech geformte Hülse steht auf dem gasdurchlässigen Boden. Das Segmentierungselement ist in Abbildung 3B mit einer Fixiervorrichtung (301) am gasdurchlässigen Boden des Katalysatorkorbs befestigt, wobei der gasdurchlässige Boden in dieser Draufsicht nicht sichtbar ist. Bevorzugt ist ein Segmentierungselement mit mehr als einer Fixiervorrichtung an dem gasdurchlässigen Boden (361) befestigt. Dadurch kann eine ungleichmäßige Verteilung des Schüttgutkatalysators wirksam vermieden werden.

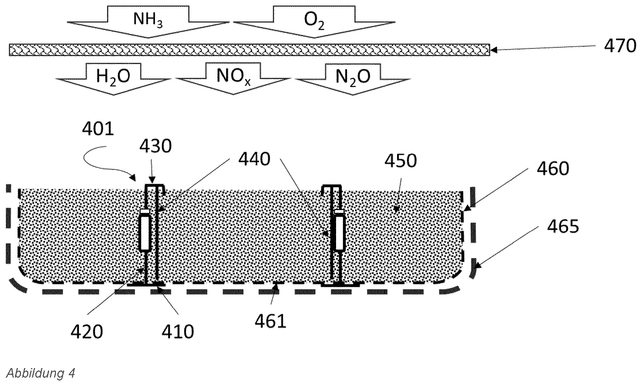

Abbildung 4 zeigt eine weitere Ausführungsform des erfindungsgemäßen segmentierten Katalysatorkorbs. Bei dem dargestellten Katalysatorkorb sind die Korbwand (460) und der gasdurchlässige Boden (461) aus demselben Material gebildet. Hier dargestellt ist die Korbwand (460) ebenfalls gasdurchlässig. Besonders bevorzugt sind Korbwand (460) und der gasdurchlässige Boden (461) aus mindestens einer Lage eines Metallnetzes hergestellt. Hier optional dargestellt ist eine Stützstruktur (465) für den Katalysatorkorb, für den Fall, dass dieser Korb zu flexibel ist, um den Schüttgutkatalysator selbst zu halten. Die Stützstruktur (465) ist so ausgebildet, dass Gas durch den Katalysatorkorb strömen kann. Wie auch in Abbildung 3 umfasst die Fixiervorrichtung einen Fuß (410) einen Ständer (420), der in Abbildung 4 höhenverstellbar ausgeführt ist, und eine Haltevorrichtung (430).

Bevorzugt ist der segmentierte Katalysatorkorb Teil eines Reaktors zur Ammoniakoxidation. In einem solchen Reaktor wird Ammoniak zusammen mit Sauerstoff über katalytisch aktive Netze (470) geleitet und bei einer Temperatur im Bereich von etwa 800°C und 930°C zu Stickoxiden und Wasser umgesetzt. Als Nebenprodukt ist in dem entstandenen Gasgemisch Lachgas enthalten. Das Produktgemisch aus Stickoxiden, Wasser und Lachgas wird über einen Schüttgutkatalysator geleitet, der sich in einem segmentierten Katalysatorkorb befindet.

### Bezugszeichenliste

| | |
|---|---|
| 101, 301 | Fixiervorrichtung |
| 110, 210, 410 | Fuß |
| 120, 220, 420 | Ständer |
| 221 | Gewindehülse |
| 222 | Gewindestange |
| 223 | Kontermutter |
| 130, 230, 430 | Haltevorrichtung |
| 140, 240, 340, 440 | Segmentierungsvorrichtung |
| 150, 350, 450 | Schüttgutkatalysator |
| 360, 460 | Katalysatorkorb |
| 161, 361, 461, | gasdurchlässiger Boden |
| 465 | Stützstruktur |
| 470 | katalytisch aktive Netze |

## Patentansprüche

1. Fixiervorrichtung (101) zur Befestigung eines Segmentierungselements (140) auf einem gasdurchlässigen Boden (161), aufweisend einen Fuß(110), einen Ständer (120) und eine Haltevorrichtung (130), wobei der Ständer auf dem Fuß (110) angeordnet ist und an dem Ständer (120) eine Haltevorrichtung (130) angeordnet ist, **dadurch gekennzeichnet, dass** die Haltevorrichtung (130) zumindest teilweise über dem Fuß (110) angeordnet ist und dass die Haltevorrichtung (120) ausgebildet ist, ein Segmentierungselement (140) gegen den Fuß (110) zu drücken.

2. Fixiervorrichtung gemäß Anspruch 1, wobei die Fixiervorrichtung ein Material enthält, das ausgewählt ist aus der Gruppe bestehend aus Edelstahl, Nickel-Chrom-EisenLegierungen, Eisen-Chrom-Aluminium-Legierungen oder aus einem dieser Materialien besteht.

3. Fixiervorrichtung gemäß einem der Ansprüche 1 oder 2, wobei der Fuß als Bügel, durchgängige Platte oder als Lochplatte ausgebildet ist.

4. Fixiervorrichtung gemäß einem der vorherigen Ansprüche, wobei der Ständer einen Stab oder ein Blech umfasst oder daraus besteht.

5. Fixiervorrichtung gemäß einem der vorherigen Ansprüche, wobei der Ständer ein Gewinde enthält, an dem der Fuß, die Haltevorrichtung oder beide befestigt sind.

6. Fixiervorrichtung gemäß einem der vorherigen Ansprüche, wobei der Ständer so ausgebildet ist, dass er zerstörungsfrei durch den gasdurchlässigen Boden geführt werden kann und der Durchmesser des Ständers im Bereich angrenzend an den Fuß vorzugsweise höchstens 5 mm beträgt.

7. Fixiervorrichtung gemäß einem der vorherigen Ansprüche, wobei der Ständer einen Verstellmechanismus umfasst, der es erlaubt Segmentierungselemente verschiedener Größe auf einem gasdurchlässigen Boden zu befestigen.

8. Fixiervorrichtung gemäß einem der vorherigen Ansprüche, wobei der Verstellmechanismus eine Schraubverbindung oder eine Klemmvorrichtung umfasst.

9. Fixiervorrichtung gemäß einem der vorherigen Ansprüche, wobei die Haltevorrichtung einen Haken oder eine Klammer aufweist.

10. Segmentierter Katalysatorkorb (302) für einen Schüttgutkatalysator (350),
wobei der Katalysatorkorb (360) einen gasdurchlässigen Boden (361), ein oder mehrere Segmentierungselemente und eine Fixiervorrichtung (301) zum Befestigen eines Segmentierungselements (340) auf dem gasdurchlässigen Boden (361) aufweist,
wobei die Fixiervorrichtung einen Fuß (310), einen Ständer (320) und eine Haltevorrichtung (330) umfasst, wobei der Fuß (310) unter dem gasdurchlässigen Boden (361) angeordnet ist, der Ständer (320) an dem Fuß (310) befestigt ist und an dem Ständer (320) eine Haltevorrichtung (330) angeordnet ist,
**dadurch gekennzeichnet, dass** die Haltevorrichtung (330) zumindest teilweise über dem Fuß (310) angeordnet ist und das Segmentierungselement (340) auf dem gasdurchlässigen Boden befestigt.

11. Segmentierter Katalysatorkorb gemäß Anspruch 10, wobei die Fixierungsvorrichtung gemäß einem der Ansprüche 1-9 ausgeführt ist.

12. Segmentierter Katalysatorkorb gemäß einem der Ansprüche 10 oder 11, wobei das Segmentierungselement ringförmig ausgestaltet ist.

13. Verwendung eines segmentierten Katalysatorkorbs gemäß einem der Ansprüche 10 -12 in einem Reaktor zur Ammoniakoxidation.
